# EUROPÄISCHE PATENTSCHRIFT

(11) **EP 3 274 745 B1**
(45) Veröffentlichungstag und Bekanntmachung des Hinweises auf die Patenterteilung: **10.09.2025**
(21) Anmeldenummer: 16709753.4
(22) Anmeldetag: 10.03.2016
(51) Int. Cl.: G02B 5/30, G02B 27/01, G02B 27/28

(54) **PROJEKTIONSFLÄCHE, WINDSCHUTZSCHEIBE MIT EINER PROJEKTIONSFLÄCHE SOWIE BLICKFELDANZEIGEVORRICHTUNG FÜR EIN KRAFTFAHRZEUG**
PROJECTION SURFACE, WINDSHIELD HAVING A PROJECTION SURFACE, AND FIELD-OF-VISION DISPLAY DEVICE FOR A MOTOR VEHICLE
SURFACE DE PROJECTION, PARE-BRISE POURVU D'UNE SURFACE DE PROJECTION AINSI QUE DISPOSITIF D'AFFICHAGE DE CHAMP VISUEL POUR UN VÉHICULE AUTOMOBILE

(30) Priorität: 24.03.2015 DE 102015205243
(43) Veröffentlichungstag der Anmeldung: 31.01.2018
(73) Patentinhaber: Bayerische Motoren Werke Aktiengesellschaft, 80809 München (DE)
(72) Erfinder: REUM, Eric, 82178 Puchheim (DE); RIEBE, Mark, 85402 Kranzberg (DE)
(86) Internationale Anmeldenummer: PCT/EP2016/055093
(87) Internationale Veröffentlichungsnummer: WO 2016/150713

(56) Entgegenhaltungen:
- EP-A1- 2 755 074
- EP-A1- 2 755 074
- EP-A2- 0 420 228
- EP-A2- 0 420 228
- US-A1- 2007 279 755
- US-A1- 2007 279 755
- US-A1- 2009 195 875
- US-A1- 2009 195 875

## Beschreibung

### Technisches Gebiet

Die Erfindung betrifft eine Projektionsfläche für eine Blickfeldanzeigevorrichtung, insbesondere in Form einer Head-Up-Display-Anzeige für ein Kraftfahrzeug. Weiterhin betrifft die vorliegende Erfindung Möglichkeiten zur Verbesserung der Anzeigeintensität eines auf die Projektionsfläche projizierten Bildes.

### Technischer Hintergrund

Blickfeldanzeigevorrichtungen in einem Kraftfahrzeug sind üblicherweise unter der Bezeichnung Head-Up -Display (HUD) bekannt. Eine Blickfeldanzeigevorrichtung umfasst in der Regel eine Projektionseinheit, um einen gewünschten Anzeigeinhalt auf eine Projektionsfläche einer Windschutzscheibe zu projizieren. Auf der Projektionsfläche erscheint ein virtuelles Bild, das sich für den Fahrer mit der realen Umgebung überlagert. Üblicherweise erfolgt die Projektion so, dass der Fahrer eine virtuelle Abbildung in einiger Entfernung vom Auge, insbesondere in einer bestimmten Entfernung über der Fahrzeugfront wahrnimmt.

Bisherige Blickfeldanzeigevorrichtungen mit dem oben genannten Aufbau werden in Kombination mit Windschutzscheiben vorgesehen, bei denen zumindest die Projektionsfläche bestimmte Reflexionseigenschaften aufweist. Das auf der Windschutzscheibe auftreffende Licht wird mit einem bestimmten Anteil an der Innenseite der Windschutzscheibe in das Auge des Fahrers reflektiert und mit einem anderen Anteil in die Windschutzscheibe eingekoppelt. Üblicherweise ist das Reflexionsverhalten erheblich abhängig von der Polarisation des einfallenden Lichts. Insbesondere umfasst der reflektierte Anteil des projizierten Lichts aufgrund des schrägen Einfallswinkels auf die Windschutzscheibe, der bei gängigen Konfigurationen in der Nähe dem Brewster-Winkel liegt, überwiegend s-polarisiertes Licht.

Der in die Windschutzscheibe eingekoppelte Anteil des projizierten Lichts wird in der Außenfläche der Windschutzscheibe erneut zu einem bestimmten Teil zurückreflektiert und zum anderen in die Umgebung gebrochen. Auch dieser Anteil besteht zu einem Großteil aus s-polarisiertem Licht, welcher sich mit dem an der Innenseite der Windschutzscheibe reflektierten Licht überlagert. Damit durch das Hauptbild und Nebenbild, die durch eine Reflexion des projizierten Lichts an den durch die Innen- und Außenfläche gebildeten Reflexionsflächen der Windschutzscheibe entstehen, kein Versatz auftritt, können die Innenseite und die Außenseite der Windschutzscheibe zumindest im Bereich der Projektionsfläche zueinander leicht geneigt sein. Dadurch kann das durch die Reflexion an den Reflexionsflächen entstehende Haupt- und Nebenbild einander überlagert werden und somit eine deutliche Abbildung des anzuzeigenden Bildes ermöglicht werden.

Aufgrund der vorrangigen Reflexion des s-polarisierten projizierten Lichts werden die Projektionseinrichtungen bisheriger Blickfeld-Anzeigevorrichtungen zur bevorzugten Abstrahlung s-polarisierten Lichts konstruiert. Dadurch ist jedoch die projizierte Abbildung bei Verwendung von p-polarisierten Sonnenbrillen nur sehr abgeschwächt sichtbar. Polarisierte Sonnenbrillen sind im Allgemeinen darauf ausgelegt, primär s-polarisiertes Licht zu absorbieren, um Blendungen an Reflexionsflächen, wie Oberflächen von Pfützen und dergleichen, an denen ebenfalls s-polarisiertes Licht bevorzugt reflektiert wird, zu absorbieren.

Die Druckschrift WO 2013/189958 offenbart eine Vereinigungsoptik eines Head-Up-Displays zum Unterdrücken eines Doppelbildes. Anstelle einer Keilfolie ist hier vorgesehen, eine transparente Scheibenanordnung mit einer ersten optisch aktiven Folie und einer zweiten optisch aktiven Folie zu koppeln. Die erste optisch aktive Folie ist ausgebildet, um eine Intensität einer Polarisationsrichtung der Lichtstrahlen zu reduzieren, und die zweite optisch aktive Folie ist ausgebildet, um die Polarisationsrichtung der Lichtstrahlen um einen Winkel zwischen 75° und 105° zu drehen. Dadurch wird erreicht, dass das in die Scheibenanordnung eingekoppelte s-polarisierte Licht, das von der Außenseite der Scheibenanordnung reflektiert wird, durch zweimaliges Durchlaufen der ersten optisch aktiven Folie so geschwächt wird, dass ein Doppelbild weitestgehend vermieden werden kann.

Die Druckschrift US 2006/0023315 A1 offenbart eine Projektionsfläche für eine Windschutzscheibe eines Kraftfahrzeugs als Teil einer HUD-Anzeigeeinrichtung. Ein Projektor projiziert p-polarisiertes Licht auf die Windschutzscheibe, das dort reflektiert wird und dadurch von einem Fahrer, der eine p-polarisierte Sonnenbrille trägt, gesehen werden kann. Dazu wird auf der Innenseite der Windschutzscheibe eine Anordnung aufgebracht, die eine erste und eine zweite, die Polarisation verändernde Schicht aufweist, zwischen denen eine Dünnfilmschicht angeordnet ist, die eine Reflexionsgrenzfläche mit den beiden Polarisationsänderungsschichten bildet. Durch eine solche Anordnung kann trotz der beiden gebildeten Reflexionsflächen das Ausbilden eines Haupt- und eines Nebenbildes vermieden werden.

Die Druckschrift US2009/0195875 A1 offenbart eine Windschutzscheibe oder ähnliches für eine Head-up-Anzeige, wobei die Windschutzscheibe Folgendes eine erste Schicht aus transparentem oder teilweise transparentem Material, eine zweite Schicht aus transparentem oder teilweise transparentem Material; und eine doppelbrechende Schicht, die in der Windschutzscheibe angeordnet ist, umfasst, wobei die doppelbrechende Schicht in der Lage ist, eine Änderung der Polarisation von Licht zu bewirken, das aus einem Projektor der Head-up-Anzeige austritt.

Die Druckschrift US 2007/279755 A1 offenbart ein Head-up-Anzeigesystem für ein Fahrzeug, das es dem Fahrzeugführer auch ermöglicht, ausgewählte Objekte zu sehen, die sichtbares Licht nur innerhalb eines einzigen eingeschränkten Frequenzbandes oder beabstandeter eingeschränkter Frequenzbänder emittieren, wobei das System umfasst: einen Kombinator, der als Teilreflektor fungiert, der in der Sichtlinie des Fahrers angeordnet ist und durch den der Fahrer die Fahrzeugumgebung einschließlich der ausgewählten Objekte sehen kann; und einen Projektor, der eine Anzeige auf den Kombinator projiziert, wobei der Projektor Licht nur innerhalb eines einzigen eingeschränkten Frequenzbandes oder beabstandeter eingeschränkter Frequenzbänder emittiert, wobei der Kombinator so positioniert ist, dass er Licht vom Projektor zum Fahrer reflektiert, wobei die Reflexionscharakteristik des Kombinators so ist, dass er nur das einfallende Licht vom Projektor reflektiert und Licht bei anderen Frequenzen durchlässt; und das/jedes Frequenzband, in dem Licht von dem Kombinierer reflektiert wird, im Wesentlichen nicht mit irgendeinem Frequenzband übereinstimmt, in dem Licht von den ausgewählten Objekten emittiert wird.

Die Druckschrift EP 2 755 074 A1 offenbart eine Anzeigevorrichtung für ein Fahrzeug, die eine Anzeige, die ein Emissionsanzeigelicht mit einer Polarisationsebene in einer bestimmten Richtung aussendet, eine Beleuchtungslichtquelle, die die Anzeige beleuchtet, und eine Phasendifferenzplatte umfasst, die gegenüber der Anzeige in einem Zustand angeordnet ist, in dem eine schnelle Achse um einen vorbestimmten Winkel in Bezug auf die Polarisationsebene des von der Anzeige emittierten Emissionsanzeigelichts verschoben ist.

Die Druckschrift EP 0 420 228 A2 offenbart ein Head-up-Display mit einem transparenten optischen Kombinator, mit einer Head-up-Display-Bildprojektionseinheit zum Projizieren eines Bildlichtstrahls auf den optischen Kombinator zur Reflexion auf ein vorbestimmtes Sichtfeld; wobei der optische Kombinierer eine erste Oberfläche und eine zweite Oberfläche umfasst, und wobei die Oberflächen nicht parallel sind und unter einem ersten bzw. zweiten Winkel in Bezug auf den Bildstrahl angeordnet sind, so dass sich die jeweiligen Bilder, die von der ersten und zweiten Oberfläche reflektiert werden, am Sichtfeld im Wesentlichen überlappen, wodurch ein im Wesentlichen geisterfreies Head-up-Display-Bild an der Viewbox bereitgestellt wird.

Es ist Aufgabe der vorliegenden Erfindung, eine Blickfeldanzeigevorrichtung für ein Kraftfahrzeug zur Verfügung zu stellen, bei dem das auf die Projektionsfläche projizierte Licht in geringerem Maße selektiv polarisiert wird, als dies bei bisherigen Blickfeldanzeigevorrichtungen der Fall ist.

### Offenbarung der Erfindung

Diese Aufgabe wird durch die Blickfeldanzeigevorrichtung gemäß Anspruch 1 en gelöst.

Weitere Ausgestaltungen sind in den abhängigen Ansprüchen angegeben.

Gemäß einem ersten Aspekt ist eine Blickfeldanzeigevorrichtung, insbesondere zum Einsatz in einem Kraftfahrzeug, vorgesehen, umfassend:
- eine Projektionsscheibe, insbesondere eine Windschutzscheibe, die zumindest in einem Bereich als eine Projektionsfläche ausgebildet ist, wobei die Projektionsfläche umfasst:
   - eine erste Reflexionsfläche, insbesondere eine Innenseite der Projektionsscheibe, zum bevorzugten Reflektieren eines in einer ersten Polarisationsart polarisierten Lichtanteils von einem projizierten Bild und zum bevorzugten Transmittieren eines in einer zweiten Polarisationsart polarisierten Lichtanteils von einem projizierten Bild,
   - eine zweite Reflexionsfläche, insbesondere eine Außenseite der Projektionsscheibe, zum Reflektieren eines in der ersten Polarisationsart polarisierten Lichtanteils von einem projizierten Bild und zum bevorzugten Transmittieren eines in der zweiten Polarisationsart polarisierten Lichtanteils von einem projizierten Bild,
   - ein zwischen der ersten Reflexionsfläche und der zweiten Reflexionsfläche angeordnetes Polarisationsmittel zur Änderung einer Polarisation von die Projektionsfläche transmittierenden Licht, so dass ein die erste Reflexionsfläche transmittierender Lichtanteil der zweiten Polarisationsart in einen Lichtanteil erster Polarisationsart geändert an der zweiten Reflexionsfläche reflektiert wird und bei einem nochmaligen Durchlaufen des Polarisationsmittels in einen Lichtanteil der zweiten Polarisationsart geändert wird, der die erste Reflexionsfläche transmittiert.

Weiterhin ist das Polarisationsmittel als ein λ/4-Polarisationsmittel, das zirkulare Polarisation bewirkt, ausgebildet.

Weiterhin ist eine Projektionseinrichtung vorgesehen, um ein zu projizierendes Bild auf die erste Reflexionsfläche der Projektionsscheibe in einer zu einer ersten Polarisationsebene parallelen Richtung zu projizieren, wobei die Projektionseinrichtung eine Lichtquelle zum Bereitstellen des für die Projektion des Bildes benötigten Lichts aufweist, wobei die Lichtquelle unpolarisiertes Licht emittiert.

Eine Idee der obigen Projektionsfläche besteht darin, die Projektionsfläche mit einem Polarisationsmittel zu versehen, um die Polarisationsebene des Anteils des auf die Projektionsfläche projizierten und in die Projektionsfläche eingekoppelten Lichts zu ändern. Das durch das Polarisationsmittel veränderte Licht wird an einer Außenseite der Projektionsfläche reflektiert und durchläuft erneut das Polarisationsmittel, so dass es als p-polarisiertes Licht in Richtung des Benutzers gerichtet aus der Projektionsfläche austritt.

Hierdurch wird zum einen die Gesamteffizienz der Reflexion an der Projektionsfläche erhöht, da der gesamte Anteil des in Richtung des Benutzers reflektierten Lichts ansteigt. Zum anderen enthält das in Richtung des Benutzers reflektierte Licht einen höheren Anteil an p-polarisiertem Licht, so dass das projizierte Bild besser wahrgenommen werden kann, wenn der Benutzer eine polarisierte Sonnenbrille trägt.

Zudem kann das Vorsehen des Polarisationsmittels mit einer Neigung zwischen der Innenseite und der Außenseite der Projektionsfläche versehen werden, um das vom Benutzer wahrgenommene Hauptbild und Nebenbild in Deckung zu bringen, so dass kein Doppelbild entsteht.

Es kann vorgesehen sein, dass die erste und die zweite Reflexionsfläche mit Hilfe eines Neigungselements, insbesondere einer Keilfolie, zueinander so geneigt sind, dass ein die erste Reflexionsfläche transmittierender und an der zweiten Reflexionsfläche reflektierter Lichtanteil gleichgerichtet zu einem an der ersten Reflexionsfläche reflektierten Lichtanteil die Projektionsfläche verlässt, so dass die durch die beiden Lichtanteile erzeugten Teilbilder des projizierten Bildes sich versatzlos überlagern.

Weiterhin kann das Polarisationsmittel als eine Schicht, Beschichtung oder eine Lage, insbesondere als eine Folie, ausgebildet sein.

Insbesondere kann die erste Reflexionsfläche als eine durch eine Seite einer inneren Scheibe gebildete Grenzfläche und die zweite Reflexionsfläche als eine durch eine Seite einer äußeren Scheibe gebildete Grenzfläche der Projektionsfläche ausgebildet sein.

Weiterhin können die erste Polarisationsart einer s-Polarisation und die zweite Polarisationsart einer p-Polarisation entsprechen.

Insbesondere kann genau ein Polarisationsmittel zwischen der ersten und der zweiten Reflexionsfläche angeordnet sein.

Gemäß einer Ausführungsform kann die Projektionsfläche mit nur genau einer ersten und nur genau einer zweiten Reflexionsfläche vorgesehen sein. Dies wird insbesondere dadurch erreicht, dass zwischen der Innenseite und der Außenseite der Projektionsscheibe angeordnete Schichten keine bzw. keine nennenswerten Brechzahlunterschiede aufweisen, so dass keine Reflexionsflächen ausgebildet werden.

### Kurzbeschreibung der Zeichnungen

Ausführungsformen werden nachfolgend anhand der beigefügten Zeichnungen näher erläutert. Es zeigen:

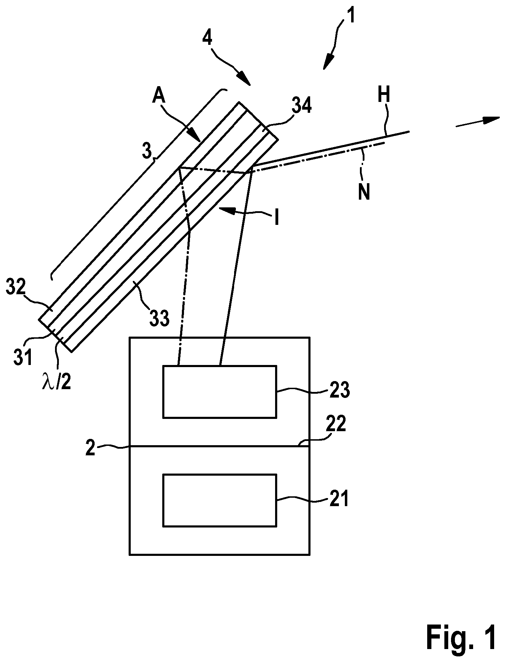

- Fig. 1: eine schematische Darstellung einer Blickfeldanzeigevorrichtung für ein Kraftfahrzeug.

### Beschreibung von Ausführungsformen

Figur 1 zeigt eine schematische Darstellung einer Blickfeldanzeigevorrichtung 1 in Form einer Head-Up-Display-Anzeige. Die Blickfeldanzeigevorrichtung 1 umfasst eine Projektionseinrichtung 2, die im Betrieb ein virtuelles Bild auf eine Projektionsfläche 3 projiziert. Die Projektionsfläche 3 kann als bilddarstellender Abschnitt einer Windschutzscheibe 4 in einem Kraftfahrzeug oder einer sonstigen transparenten Scheibe in einem anderen Einsatzgebiet vorgesehen sein.

Die Projektionseinrichtung 2 ist mit einer Lichtquelle 21, einer Bildgebungseinheit 22 z.B. in Form eines transparenten Displays und üblicherweise mit einer Abbildungsoptik 23 versehen. Die Abbildungsoptik 23 projiziert die abzubildende Abbildung auf die Projektionsfläche 3.

Zumindest im Bereich der Projektionsfläche 3 ist die Windschutzscheibe 4 mit einem Neigungselement 31 z.B. in Form einer Keilfolie oder keilförmigen Lage bzw. Schicht versehen, die zwischen einer äußeren Scheibenlage 32 und einer inneren Scheibenlage 33 angeordnet ist. Das Neigungselement 31 weist eine Keilform auf, um eine durch die äußere Scheibenlage 32 gebildete Außenseite A (zweite Reflexionsfläche) der Windschutzscheibe 4 und eine durch die innere Scheibenlage 33 gebildete Innenseite I (die einer ersten Reflexionsfläche entspricht) der Windschutzscheibe 4 in einem Winkel zueinander anzuordnen, d.h. gegenüber einer parallelen Anordnung um einen Winkel zwischen 0,2 und 1 mrad, insbesondere zwischen 0,3 und 0,6 mrad gegeneinander zu neigen. Die Innenseite I entspricht der Seite, auf die das virtuelle Bild projiziert wird und die zum Benutzer der Blickfeldanzeigevorrichtung 1 gerichtet ist. Die Außenseite A (die einer zweiten Reflexionsfläche entspricht) entspricht einer der Innenseite I bezüglich der Projektionsfläche 3 gegenüberliegenden Seite.

Auf die Projektionsfläche 3 projiziertes Licht wird an der Innenseite I und an der Außenseite A reflektiert. Das Neigungselement 31 und die innere und äußere Scheibenlage 33, 32 sind so ausgebildet, dass im Inneren der so gebildeten Windschutzscheibe 4 keine Grenzfläche für eine Reflexion vorliegt, insbesondere sind die Brechungsindizes der Scheibenlagen 32, 33 und des Neigungselementes 31 gleich bzw. nahezu gleich. Die Neigung dient dazu, einen projizierten Lichtanteil, der von der Innenseite der Windschutzscheibe 4 reflektiert wird und einen Lichtanteil, der an der Innenseite I transmittiert wird, von der Außenseite A der äußeren Scheibenlage 32 zurück in die Projektionsfläche 3 reflektiert wird und an der Innenseite I transmittiert und gebeugt wird, so zu überlagern, dass vom Sichtpunkt des Benutzers beide reflektierten Bilder (Hauptbild und Nebenbild) überlagert werden und in Deckung sind. Damit ist gewährleistet, dass der Benutzer das an der Innenseite I reflektierte Hauptbild H und das an der Außenseite A reflektierte Nebenbild N nicht separat wahrnimmt, wodurch die Abbildung des darzustellenden Bildes gestört werden würde.

Da die Einstrahlung des projizierten Lichtes auf die Windschutzscheibe 4 im Betrieb in eine erste, insbesondere in eine vertikale Richtung bzw. in Richtung der Neigung der Windschutzscheibe 4 erfolgt, wird an der Innenseite I und an der Außenseite A ein Lichtanteil des projizierten Lichts, der eine Polarisationsebene aufweist, die senkrecht auf der Ebene des Auftreffwinkels/Einfallsebene (zur Flächennormalen der Innenseite I) des projizierten Lichtstrahls auf der Windschutzscheibe 4 steht, bevorzugt reflektiert. Der Lichtanteil, der eine Polarisation in dieser Polarisationsebene aufweist, wird s-polarisierter Lichtanteil genannt. Ein Lichtanteil, dessen Polarisationsebene parallel hierzu verläuft, wird p-polarisierter Lichtanteil genannt.

Durch den Auftreffwinkel des projizierten Lichtstrahlenbündels, der durch die Anordnung der Projektionseinrichtung 2 nahe dem Brewster-Winkel gewählt ist, wird bevorzugt ein s-polarisierter Lichtanteil an den Grenzflächen der Projektionsfläche 3, nämlich der Innenseite I und der Außenseite A, reflektiert. Die reflektierten Lichtanteile sind vorwiegend s-polarisiert und die an den Grenzflächen transmittierten Lichtanteile sind vorwiegend p-polarisiert.

In einer beispielhaften Anordnung addieren sich bei einem projizierten Bild, das mit unpolarisiertem Licht erzeugt wird, d.h. mit einem Lichtanteil von jeweils 50% s-polarisiertem und p-polarisiertem Licht, und das so auf die Projektionsfläche 3 gerichtet wird, dass das Licht mit einem Einfallswinkel von z.B. 64° (zur Flächennormalen) auf die Innenseite I auftrifft, die reflektierten Anteile des Hauptbildes und des Nebenbildes zu 15,7% s-polarisiertem Licht und 0,75% p-polarisiertem Lichtanteil bezüglich der ursprünglichen gesamten Lichtstärke.

Wenn bei der obigen Anordnung von der Projektionseinrichtung polarisiertes Licht mit einem Lichtanteil von 100% s-polarisiertem Licht ausgegeben wird, addieren sich die s-polarisierten Lichtanteile des Haupt- und Nebenbildes zu einem Anteil von 31,4% s-polarisiertem Licht, das zum Benutzer der Blickfeldanzeigevorrichtung 1 gerichtet ist.

Trägt der Benutzer eine Sonnenbrille, die zum Filtern von Reflexionsstrahlung p-polarisiert ist, so können dadurch im erstgenannten Fall 0,75% des gesamten projizierten Lichts vom Benutzer wahrgenommen werden. Diese Lichtstärke kann zu schwach sein, um ein gegenüber dem Umgebungslicht wahrnehmbares Bild zu erzeugen, wenn der Benutzer eine Sonnenbrille trägt. Dies ist insbesondere störend, wenn der Benutzer durch das Tageslicht ohne Sonnenbrille geblendet wird.

Es kann daher in einer Ausführungsform vorgesehen sein, in der Projektionsfläche 3 ein Polarisierungsmittel 34 vorzusehen, das bei einem einfachen Durchgang des an der Innenseite I transmittierten Lichtstrahls durch die Projektionsfläche 3 entsprechend einem λ/2-Polarisator wirkt. Ein λ/2-Polarisator dreht eine Polarisationsebene um 90°. Dadurch wird die Polarisationsebene des an der Innenseite I der Projektionsfläche 3 transmittierten s-polarisierten Lichtanteils zu einem p-polarisierten Lichtanteil, und der transmittierte p-polarisierte Lichtanteil wird zu einem s-polarisierten Lichtanteil geändert.

Der an der Innenseite I transmittierte Lichtanteil trifft an der durch die Außenseite A gebildete Grenzfläche auf und wird dort teilweise reflektiert und teilweise transmittiert. Der an der Außenseite A reflektierte Lichtanteil ist wiederum vorwiegend ein s-polarisierter Lichtanteil des transmittierten, polarisationsgeänderten Lichts, während ein p-polarisierter Lichtanteil des transmittierten, polarisationsgeänderten Lichts vorwiegend in die Umgebung transmittiert wird. Der an der Außenseite A reflektierte s-polarisierte Lichtanteil durchläuft erneut die Projektionsfläche 3 in Richtung des Benutzers. Dabei durchläuft dieser erneut das Polarisationsmittel 34, so dass eine erneute Polarisationsänderung um 90° erfolgt. Dadurch wird der an der Außenseite A reflektierte s-polarisierte Lichtanteil zu einem p-polarisierten Lichtanteil.

Der von der Innenseite I auftreffende transmittierte und an der Außenseite A reflektierte p-polarisierte Lichtanteil wird nun an der Innenseite I transmittiert und zu dem zuvor an der Innenseite I der Projektionsfläche 3 reflektierten s-polarisierten Lichtanteil parallel ausgerichtet. Dies erfolgt aufgrund der Defraktion an der Grenzfläche der Innenseite **I,** so dass das durch den an der Innenseite I der Projektionsfläche 3 reflektierten s-polarisierten Lichtanteil gebildete Hauptbild und das durch den transmittierten und an der Außenseite A reflektierten p-polarisierten Lichtanteil gebildete Nebenbild sich überlagern.

Auf diese Weise ist es möglich, den zuvor an der Innenseite I transmittierten Lichtanteil durch Reflexion an der Außenseite A in das Auge des Benutzers zu richten. Mit anderen Worten wird ein zuvor nur schwach reflektierter p-polarisierter Lichtanteil des projizierten Bildes, der an der Innenseite I im Wesentlichen nicht reflektiert (sondern im wesentlichen transmittiert) wird, durch Reflexion an der Außenseite A der Projektionsfläche 3 auf das Auge des Benutzers reflektiert. Dies erfolgt durch zweimalige Polarisationsänderung um jeweils 90°, so dass die im Auge des Benutzers eintreffende Polarisationsrichtung des betreffenden Lichtanteils der ursprünglichen Polarisationsrichtung entspricht.

Auf diese Weise ist es z.B. für das obige Anordnungsbeispiel möglich, bei einem projizierten Bild, das mit unpolarisiertem Licht erzeugt wird, d.h. mit einem Lichtanteil von jeweils 50% s-polarisiertem und p-polarisiertem Licht, einen Lichtanteil des s-polarisierten Lichts von 11,4% und einen Lichtanteil des p-polarisierten Lichts von 7,8% zu erreichen. Dadurch ist es möglich, dass auch beim Tragen einer polarisierenden Sonnenbrille das projizierte Bild wahrgenommen werden kann.

In einer weiteren Ausführungsform mit einer Projektionseinrichtung 2, die unpolarisiertes Licht mit einem Lichtanteil von jeweils 50% s-polarisiertem und p-polarisiertem Licht abgibt, ergibt sich bei ansonsten gleicher Konfiguration der Blickfeldanzeigevorrichtung 1 bei einem als λ/4-Polarisationsmittel ausgebildetes Polarisationsmittel 34 noch ein Anteil von s-polarisiertem Licht von 14% und p-polarisiertem Licht von 3,7% an der gesamten von der Lichtquelle 21 abgegebenen Lichtstärke. Durch das λ/4-Polarisationsmittel wird das die Projektionsfläche 3 durchlaufende Licht zirkular polarisiert. Dabei wird an der Außenfläche A der Projektionsfläche das Licht vorrangig s-reflektiert und bei einem erneuten Durchgang durch das λ/4-Polarisationsmittel erneut zirkular polarisiert. Auf diese Weise kann ein p-polarisierter Lichtanteil, der an der Innenseite I transmittiert wird, zwar schwächer als bei dem oben beschriebenen Ausführungsbeispiel durch Reflexion an der Außenseite A zum Benutzer gerichtet werden, trotzdem ist die Gesamteffizienz der Reflexion an der Projektionsfläche 3 gegenüber einer herkömmlichen Projektionsfläche ohne Polarisationsmittel verbessert. Weiterhin ist der Anteil des p-polarisierten Lichts im reflektierten Gesamtbild größer, so dass bei Verwendung einer p-polarisierten Sonnenbrille weiterhin das projizierte Bild wahrgenommen werden kann.

In einer weiteren Ausführungsform mit einer Projektionseinrichtung 2, die rein s-polarisiertes Licht abgibt, ergibt sich bei ansonsten gleicher Konfiguration der Blickfeldanzeigevorrichtung 1 bei einem λ/4-Polarisationsmittel (Polarisationsmittel 34) noch ein Anteil von s-polarisiertem Licht von 23,8% und p-polarisiertem Licht von 4,2% an der gesamten von der Lichtquelle 21 abgegebenen Lichtstärke. Somit ist selbst bei einer Projektionseinrichtung 2, die nur s-polarisiertes Licht abgibt, bei Verwendung eines λ/4-Polarisationsmittels eine Wahrnehmung des p-polarisierten Nebenbilds möglich.

Das Polarisationsmittel 34 kann als Beschichtung oder Lage (Folie) auf der inneren oder äußeren Scheibenlage 33, 32 aufgebracht sein. Alternativ kann das Polarisationsmittel 34 in oder auf dem als Keilfolie oder Platte ausgebildeten Neigungselement 31 ein- bzw. aufgebracht sein.

Die äußere Scheibenlage 32, das Neigungselement 31, das Polarisationsmittel 34 und die innere Scheibenlage 33 sind so ausgebildet, dass sich abgesehen von der Innenseite I und der Außenseite A der damit gebildeten Projektionsfläche 3 bzw. Windschutzscheibe 4 keine optische Grenzflächen ausbilden, an denen eine Reflektion auftreten kann. Insbesondere sind keine im Inneren der Projektionsfläche 3 liegenden Reflexionsebenen vorgesehen.

Weiterhin kann vorgesehen sein, dass das Polarisationsmittel 34 zwischen zwei Grenzflächen (in den gezeigten Ausführungsformen zwischen der Außenseite A und der Innenseite I der Windschutzscheibe 4) vorgesehen ist Insbesondere weisen die äußere Scheibenlage 32, das Neigungselement 31, das Polarisationsmittel 34 und die innere Scheibenlage 33 gleiche bzw. annähernd gleiche Brechungsindizes auf.

### Bezugszeichenliste

- 1: Blickfeldanzeigevorrichtung
- 2: Projektionseinrichtung
- 3: Projektionsfläche
- 4: Windschutzscheibe
- 21: Lichtquelle
- 22: transparente Anzeigeeinrichtung
- 23: Abbildungsoptik
- 31: Neigungselement
- 32: äußere Scheibenlage
- 33: innere Scheibenlage
- 34: Polarisationsmittel
- I: Innenseite
- A: Außenseite

## Patentansprüche

1. Blickfeldanzeigevorrichtung (1), insbesondere zum Einsatz in einem Kraftfahrzeug, umfassend:
- eine Projektionsscheibe (4), insbesondere eine Windschutzscheibe, die zumindest in einem Bereich als eine Projektionsfläche (3) ausgebildet ist, wobei die
Projektionsfläche (3) umfasst:
o eine erste Reflexionsfläche (I), die geeignet ist, um einen in einer ersten Polarisationsart polarisierten Lichtanteil von einem projizierten Bild zu reflektieren und einen in einer zweiten Polarisationsart polarisierten Lichtanteil von einem projizierten Bild zu transmittieren,
o eine zweite Reflexionsfläche (A), die geeignet ist, um einen in der ersten Polarisationsart polarisierten Lichtanteil von dem projiziertem Bild zu reflektieren und um einen in der zweiten Polarisationsart polarisierten Lichtanteil von einem projizierten Bild zu transmittieren,
o ein zwischen der ersten Reflexionsfläche (I) und der zweiten Reflexionsfläche (A) angeordnetes Polarisationsmittel (34) zur Änderung einer Polarisation von die Projektionsfläche (3) transmittierenden Licht, so dass der die erste Reflexionsfläche (I)) transmittierende Lichtanteil der zweiten Polarisationsart in einen Lichtanteil erster Polarisationsart geändert wird, an der zweiten Reflexionsfläche (A) reflektiert wird und bei einem nochmaligen Durchlaufen des Polarisationsmittels (34) in einen Lichtanteil der zweiten Polarisationsart geändert wird, der die erste Reflexionsfläche (I) transmittiert, wobei das Polarisationsmittel als λ/4-Polarisationsmittel, das zirkulare Polarisation bewirkt, ausgebildet ist, und
- eine Projektionseinrichtung (2), um ein zu projizierendes Bild auf die erste Reflexionsfläche (I) der Projektionsscheibe (3) in einer zu einer ersten Polarisationsebene parallelen Richtung zu projizieren, wobei die Projektionseinrichtung (2) eine Lichtquelle (21) zum Bereitstellen des für die Projektion des Bildes benötigten Lichts aufweist, wobei die Lichtquelle (21) unpolarisiertes Licht emittiert.

2. Blickfeldanzeigevorrichtung (1) nach Anspruch 1, wobei die erste und die zweite Reflexionsfläche (I, A) mit Hilfe eines Neigungselements (31), insbesondere einer Keilfolie, zueinander so geneigt sind, dass ein die erste Reflexionsfläche (I) transmittierender und an der zweiten Reflexionsfläche (A) reflektierter Lichtanteil gleichgerichtet zu einem an der ersten Reflexionsfläche (I) reflektierten Lichtanteil die Projektionsfläche (3) verlässt, so dass die durch die beiden Lichtanteile erzeugten Teilbilder des projizierten Bildes sich versatzlos überlagern.

3. Blickfeldanzeigevorrichtung (1) nach Anspruch 1 oder 2, wobei das Polarisationsmittel (34) als eine Schicht oder eine Lage, insbesondere als eine Folie, ausgebildet ist.

4. Blickfeldanzeigevorrichtung (1) nach einem der Ansprüche 1 bis 3, wobei die erste Reflexionsfläche (I) als eine durch eine Seite einer inneren Scheibenlage (33) gebildete Grenzfläche und die zweite Reflexionsfläche (A) als eine durch eine Seite einer äußeren Scheibenlage (32) gebildete Grenzfläche der Projektionsfläche (3) ausgebildet ist.

5. Blickfeldanzeigevorrichtung (1) nach einem der Ansprüche 1 bis 4, wobei genau ein Polarisationsmittel (34) zwischen der ersten und der zweiten Reflexionsfläche (I, A) angeordnet ist.

6. Blickfeldanzeigevorrichtung (3) nach einem der Ansprüche 1 bis 5, wobei nur eine erste und nur eine zweite Reflexionsfläche (I, A) vorgesehen sind.

## Claims

1. Field-of-view display device (1), in particular for use in a motor vehicle, comprising:
- a projection screen (4), in particular a windscreen, which is designed at least in one region as a projection surface (3), the
projection surface (3) comprising:
o a first reflection surface (I), which is suitable for reflecting from a projected image a light component that is polarized in a first type of polarization and transmitting from a projected image a light component that is polarized in a second type of polarization,
o a second reflection surface (A), which is suitable for reflecting from the projected image a light component that is polarized in the first type of polarization and for transmitting from a projected image a light component that is polarized in the second type of polarization,
o a polarization means (34), arranged between the first reflection surface (I) and the second reflection surface (A), for changing a polarization of the light transmitting through the projection surface (3) in such a way that the light component of the second type of polarization transmitting through the first reflection surface (I) is changed to a light component of the first type of polarization, is reflected at the second reflection surface (A) and, when passing again through the polarization means (34), is changed to a light component of the second type of polarization, which transmits through the first reflection surface (I), wherein the polarization means is formed as a λ/4 polarization means, which brings about circular polarization, and
- a projection device (2) for projecting an image to be projected onto the first reflection surface (I) of the projection screen (3) in a direction parallel to a first polarization plane, with the projection device (2) having a light source (21) for providing the light required for the projection of the image, with the light source (21) emitting unpolarized light.

2. Field-of-view display device (1) according to Claim 1, wherein the first and the second reflection surface (I, A) are inclined, using an inclination element (31), in particular a wedge film, relative to each other in such a way that a light component which transmits through the first reflection surface (I) and is reflected at the second reflection surface (A) leaves the projection surface (3) in the same direction as a light component reflected at the first reflection surface (I) in such a way that the partial images of the projected image which are generated by the two light components overlap without offset.

3. Field-of-view display device (1) according to Claim 1 or 2, wherein the polarization means (34) is formed as a layer, in particular as a film.

4. Field-of-view display device (1) according to any of Claims 1 to 3, wherein the first reflection surface (I) is formed as an interface formed by one side of an inner screen layer (33) and the second reflection surface (A) is formed as an interface of the projection surface (3) formed by one side of an outer screen layer (32).

5. Field-of-view display device (1) according to any of Claims 1 to 4, wherein exactly one polarization means (34) is arranged between the first and the second reflection surface (I, A).

6. Field-of-view display device (3) according to any of Claims 1 to 5, wherein only a first and only a second reflection surface (I, A) are provided.

## Revendications

1. Arrangement d'affichage de champ de vision (1), notamment pour une utilisation dans un véhicule automobile, comprenant :
- une vitre de projection (4), notamment un pare-brise, qui est configurée au moins dans une zone comme une surface de projection (3), la surface de projection (3) comprenant :
o une première surface de réflexion (I), qui est adaptée pour réfléchir une partie de la lumière polarisée dans un premier type de polarisation provenant d'une image projetée et pour transmettre une partie de la lumière polarisée dans un deuxième type de polarisation provenant d'une image projetée,
o une deuxième surface de réflexion (A), qui est adaptée pour réfléchir une partie de la lumière polarisée dans le premier type de polarisation provenant de l'image projetée et pour transmettre une partie de la lumière polarisée dans le deuxième type de polarisation provenant d'une image projetée,
o un moyen de polarisation (34), disposé entre la première surface réfléchissante (I) et la deuxième surface réfléchissante (A), destiné à modifier une polarisation de la lumière transmise par la surface de projection (3), de telle sorte que la partie de lumière de deuxième type de polarisation transmise par la première surface réfléchissante (I) soit transformée en une partie de lumière du premier type de polarisation, soit réfléchie sur la deuxième surface réfléchissante (A) et, lors d'un nouveau passage à travers le moyen de polarisation (34), soit transformée en une partie de lumière de premier type de polarisation qui traverse par transmission la première surface réfléchissante (I), le moyen de polarisation étant conçu comme un moyen de polarisation λ/4 qui provoque une polarisation circulaire, et
- un dispositif de projection (2), destiné à projeter une image à projeter sur la première surface de réflexion (I) de la vitre de projection (3) dans une direction parallèle à un premier plan de polarisation, le dispositif de projection (2) possédant une source de lumière (21) destinée à fournir la lumière nécessaire à la projection de l'image, la source de lumière (21) émettant une lumière non polarisée.

2. Arrangement d'affichage de champ de vision (1) selon la revendication 1, les première et deuxième surfaces réfléchissantes (I, A) étant inclinées l'une par rapport à l'autre à l'aide d'un élément d'inclinaison (31), notamment d'une feuille en forme de coin, de telle sorte qu'une partie de la lumière transmise par la première surface de réflexion (I) et réfléchie sur la deuxième surface de réflexion (A) quitte la surface de projection (3) dans la même direction qu'une partie de la lumière réfléchie sur la première surface de réflexion (I), de sorte que les images partielles de l'image projetée générées par les deux parties de lumière se superposent sans décalage.

3. Arrangement d'affichage de champ de vision (1) selon la revendication 1 ou 2, le moyen de polarisation (34) étant réalisé sous la forme d'une strate ou d'une couche, notamment sous la forme d'un film.

4. Arrangement d'affichage de champ de vision (1) selon l'une des revendications 1 à 3, la première surface de réflexion (I) étant réalisée sous la forme d'une surface limite formée par un côté d'une couche de vitre intérieure (33) et la deuxième surface de réflexion (A) étant réalisée sous la forme d'une surface limite formée par un côté d'une couche de vitre extérieure (32) de la surface de projection (3).

5. Arrangement d'affichage de champ de vision (1) selon l'une des revendications 1 à 4, exactement un moyen de polarisation (34) étant disposé entre la première et la deuxième surface de réflexion (I, A).

6. Arrangement d'affichage de champ de vision (3) selon l'une des revendications 1 à 5, seules une première et une deuxième surfaces de réflexion (I, A) étant prévues.
